# EUROPÄISCHE PATENTSCHRIFT

(11) **EP 1 781 962 B1**
(45) Veröffentlichungstag und Bekanntmachung des Hinweises auf die Patenterteilung: **30.11.2011**
(21) Anmeldenummer: 04790887.6
(22) Anmeldetag: 27.10.2004
(51) Int. Cl.: F16H 3/66

(54) **MEHRSTUFENGETRIEBE**
MULTISPEED TRANSMISSION
BOITE DE VITESSES A PLUSIEURS ETAGES

(30) Priorität: 27.08.2004 DE 102004041446
(43) Veröffentlichungstag der Anmeldung: 09.05.2007
(73) Patentinhaber: ZF Friedrichshafen AG, 88038 Friedrichshafen (DE)
(72) Erfinder: DIOSI, Gabor, 88045 Friedrichshafen (DE); HAUPT, Josef, 88069 Tettnang (DE); GUMPOLTSBERGER, Gerhard, 88045 Friedrichshafen (DE); ZIEMER, Peter, 88069 Tettnang (DE); BREHMER, Martin, 78467 Konstanz (DE)
(86) Internationale Anmeldenummer: PCT/EP2004/012107
(87) Internationale Veröffentlichungsnummer: WO 2006/024326

(56) Entgegenhaltungen:
- DE-A1- 2 936 969
- US-B1- 6 659 903
- US-B1- 6 716 131

## Beschreibung

Die vorliegende Erfindung betrifft ein Mehrstufengetriebe in Planetenbauweise, insbesondere ein Automatgetriebe für ein Kraftfahrzeugs.

Automatgetriebe, insbesondere für Kraftfahrzeuge, umfassen nach dem Stand der Technik Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelement, wie etwa einem hydrodynamischen Drehmomentwandler, oder einer Strömungskupplung verbunden sind.

Ein derartiges Getriebe geht aus der EP 0 434 525 A1 hervor. Es umfasst im Wesentlichen eine Antriebswelle und eine Abtriebswelle, die parallel zueinander angeordnet sind, einen konzentrisch zur Abtriebswelle angeordneten, als Zweisteg-Vierwellen-Planetengetriebe ausgebildeten und mit der Antriebswelle verbindbaren Hauptradsatz, einen mit der Antriebswelle verbundenen und mit dem Hauptradsatz verbindbaren Vorschaltradsatz, sowie fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Hauptradsatzes benötigt. Diese sind in Kraftflussrichtung im Wesentlichen hinter dem Vorschaltradsatz in Richtung Hauptradsatz angeordnet. Bei dem zweiten Leistungsweg ist eine weitere Kupplung vorgesehen, die diesen mit einem weiteren Element des Hauptradsatzes lösbar verbindet. Hierbei sind die Kupplungen derart angeordnet, dass der Innenlamellenträger den Abtrieb bildet.

Des weiteren ist aus der Druckschrift US 6,139,463 ein kompaktes Mehrstufengetriebe in Planetenbauweise, insbesondere für ein Kraftfahrzeug bekannt, welches zwei miteinander gekoppelte Planetenradsätze und einen Vorschaltradsatz sowie drei Kupplungen und zwei Bremsen aufweist. Bei diesem bekannten Mehrstufengetriebe sind bei einem ersten Leistungsweg zwei Kupplungen C-1 und C-3 zum Übertragen des Drehmoments vom Vorschaltradsatz zu den beiden gekoppelten Planetenradsätzen vorgesehen. Hierbei ist der Außenlamellenträger bzw. die Zylinder- bzw. Kolben- und Druckausgleichsseite der Kupplung C-3 mit einer ersten Bremse B-1 verbunden. Zudem ist der Innenlamellenträger der dritten Kupplung C-3 mit der Zylinder bzw. Kolben- und Druckausgleichsseite der ersten Kupplung C-1 verbunden, wobei der Innenlamellenträger der ersten Kupplung C-1 abtriebsseitig angeordnet ist und mit einem Sonnenrad des dritten Planetenradsatzes verbunden ist.

Des weiteren ist aus der DE 199 49 507 A1 der Anmelderin ein Mehrstufengetriebe bekannt, bei dem an der Antriebswelle zwei nicht schaltbare Vorschaltradsätze vorgesehen sind, die ausgangsseitig zwei Drehzahlen erzeugen, die neben der Drehzahl der Antriebswelle wahlweise auf einen auf die Abtriebswelle wirkenden, schaltbaren, mehrgliedrigen Hauptplanetenradsatz durch selektives Schließen der verwendeten Schaltelemente derart schaltbar sind, dass zum Umschalten von einem Gang in den jeweils nächstfolgenden höheren oder niedrigeren Gang von den beiden gerade betätigten Schaltelementen jeweils nur ein Schaltelement zu- oder abgeschaltet werden muss.

Aus der DE 199 12 480 A1 ist ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang und mit einer Antriebs- sowie einer Abtriebswelle bekannt. Das automatisch schaltbare Kraftfahrzeuggetriebe ist derart ausgebildet, dass die Antriebswelle direkt mit dem Sonnenrad des zweiten Planetensatzes verbunden ist und dass die Antriebswelle über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder das Sonnenrad des dritten Planetensatzes über die dritte Bremse mit dem Gehäuse verbindbar.

Des weiteren ist aus der DE 10213 820 A1 ein Mehrgangautomatikgetriebe bekannt, umfassend einen ersten Eingangspfad T1 eines ersten Übersetzungsverhältnisses; einen Eingangspfad T2, der ein größeres Übersetzungsverhältnis als dieser Eingangspfad T1 hat; einen Planetenradsatz mit vier Elementen, wobei die vier Elemente ein erstes Element, ein zweites Element, ein drittes Element und ein viertes Element in der Reihenfolge der Elemente in einem Drehzahldiagramm sind; eine Kupplung C-2, die eine Drehung des Eingangspfads T2 auf das erste Element S3 überträgt; eine Kupplung C-1, die die Drehung von dem Eingangspfad T2 auf das vierte Element S2 überträgt; eine Kupplung C-4, die eine Drehung von dem Eingangspfad T1 auf das erste Element überträgt; eine Kupplung C-3, die die Drehung von dem Eingangspfad T1 auf das zweite Element C3 überträgt; eine Bremse B-1, die den Eingriff des vierten Elements herstellt; eine Bremse B-2, die den Eingriff des zweiten Elements herstellt; und ein Abtriebselement, das mit dem dritten Element R3 gekoppelt ist.

Im Rahmen der DE 101 15 983 A1 der Anmelderin wird ein Mehrstufengetriebe beschrieben, mit einer Antriebswelle, die mit einem Vorschaltsatz verbunden ist, mit einer Abtriebswelle, die mit einem Nachschaltsatz verbunden ist, und mit maximal sieben Schaltelementen, durch deren wahlweises Schatten mindestens sieben Vorwärtsgänge ohne Gruppenschaltung schaltbar sind. Der Vorschaltsatz wird aus einem Vorschalt-Planetenradsatz oder maximal zwei nicht schaltbaren, mit dem ersten Vorschalt-Planetenradsatz gekoppelten Vorschalt-Planetenradsätzen gebildet, wobei der Nachschaltsatz als Zweisteg-Vierwellen-Getriebe mit zwei schaltbaren Nachschalt-Planetenradsätzen ausgebildet ist und vier freie Wellen aufweist. Die erste freie Welle dieses Zweisteg-Vierwellen-Getriebes ist mit dem ersten Schaltelement verbunden, die zweite freie Welle mit dem zweiten und dritten Schaltelement, die dritte freie Welle mit dem vierten und fünften Schaltelement und die vierte freie Welle ist mit der Abtriebswelle verbunden. Für ein Mehrstufengetriebe mit insgesamt sechs Schaltelementen wird erfindungsgemäß vorgeschlagen, die dritte freie Welle oder die erste freie Welle des Nachschaltsatzes zusätzlich mit einem sechsten Schaltelement zu verbinden. Für ein Mehrstufengetriebe mit insgesamt sieben Schaltelementen wird erfindungsgemäß vorgeschlagen, die dritte freie Welle zusätzlich mit einem sechsten Schaltelement (D') und die erste freie Welle zusätzlich mit einem siebten Schaltelement zu verbinden.

Ferner ist im Rahmen der DE 101 15 987 der Anmelderin ein Mehrstufengetriebe mit acht Gängen beschrieben. Dieses Getriebe besteht neben der Antriebswelle und der Abtriebswelle aus einem schaltbaren Vorschaltradsatz und einem schaltbaren Nachschaltradsatz. Der Vorschaltradsatz besteht aus einem ersten Planetenradsatz, welcher neben der Eingangsdrehzahl der Antriebswelle eine zweite Drehzahl anbietet, die wahlweise auf einen Nachschaltradsatz geschaltet werden kann. Der Nachschaltradsatz besteht aus zwei gekoppelten Planetenradsätzen. Unter Verwendung von zwei Leistungswegen und sechs Schaltelementen sind acht Vorwärtsgänge gruppenschaltungsfrei schaltbar. Ein 8-Gang-Mehrstufengetriebe ist ferner aus der DE 29 36 969 bekannt; es umfasst acht Schaltelemente und vier Radsätze.

Des weiteren sind aus der US 6,716,131 B1 Mehrstufengetriebe bekannt, welche drei gekoppelte Minus-Planetenradsätze, drei Kupplungen und zwei Bremsen umfassen. Diese Getriebe können als 5-Gang, 6-Gang- und 7-Gang-Getriebe ausgebildet werden, wobei ein Element eines der Planetensätze ständig drehfest mit dem Gehäuse verbunden ist, so dass die Getriebe sechs drehbare Wellen aufweisen.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen direkten Gang enthalten sowie für den Einsatz sowohl in Pkw als auch Nkw geeignet sein. Außerdem sollen diese Getriebe einen geringen Bauaufwand, insbesondere eine geringe Anzahl an Schaltelementen erfordern und bei sequentieller Schaltweise sogenannte Gruppenschaltungen vermeiden, so dass bei Schaltungen von einem Gang in den nächstfolgend höheren oder in den nächstfolgend niedrigeren Gang jeweils nur ein zuvor geschlossenes Schaltelement geöffnet und ein zuvor nicht geschaltetes Schaltelement geschlossen wird.

Der vorliegenden Erfindung liegt die Aufgabe zugrunde, ein Mehrstufengetriebe der eingangs genannten Art vorzuschlagen, bei dem der Bauaufwand optimiert wird und zudem der Wirkungsgrad in den Hauptfahrgängen hinsichtlich der Schlepp- und Verzahnungsverluste verbessert wird. Zudem sollen bei dem erfindungsgemäßen Mehrstufengetriebe geringe Momente auf die Schaltelemente und Planetensätze wirken sowie die Drehzahlen der Wellen, Schaltelemente und Planetensätze möglichst gering gehalten werden. Des weiteren soll die Anzahl der Gänge sowie die Getriebespreizung erhöht werden, so dass in vorteilhafter Weise mindestens acht Vorwärtsgänge und mindestens ein Rückwärtsgang realisierbar sind. Außerdem soll das erfindungsgemäße Getriebe für jegliche Bauweise in ein Fahrzeug geeignet sein, insbesondere für eine Front-Quer-Anordnung.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird ein erfindungsgemäßes Mehrstufengetriebe in Planetenbauweise vorgeschlagen, welches eine Antriebswelle und eine Abtriebswelle aufweist, welche in einem Gehäuse angeordnet sind. Des weiteren sind zumindest drei Planetensätze, im Folgenden als erster, zweiter und dritter Planetensatz bezeichnet, mindestens sieben drehbare Wellen - im Folgenden als Antriebswelle, Abtriebswelle, dritte, vierte, fünfte, sechste und siebte Welle bezeichnet - sowie zumindest sechs Schaltelemente, umfassend Bremsen und Kupplungen, vorgesehen, deren selektives Eingreifen verschiedene Übersetzungsverhältnisse zwischen der Antriebswelle und der Abtriebswelle bewirkt, so dass vorzugsweise mindestens acht Vorwärtsgänge und mindestens ein Rückwärtsgang realisierbar sind.

Hierbei ist die Antriebswelle ständig mit dem Sonnenrad des zweiten Planetensatzes verbunden und über eine Kupplung mit der fünften Welle lösbar verbindbar, welche ständig mit dem Steg des ersten Planetensatzes verbunden, über eine Bremse an das Gehäuse ankoppelbar und über eine weitere Kupplung mit der siebten Welle lösbar verbindbar ist, die ständig mit dem Steg des zweiten Planetensatzes verbunden und über eine weitere Kupplung mit der sechsten Welle lösbar verbindbar ist.

Gemäß der Erfindung ist die sechste Welle ständig mit dem Sonnenrad des ersten Planetensatzes und dem Hohlrad des dritten Planetensatzes verbunden, wobei die dritte Welle ständig mit dem Hohlrad des zweiten Planetensatzes und dem Steg des dritten Planetensatzes verbunden und über eine weitere Bremse an das Gehäuse ankoppelbar ist. Gemäß der Erfindung ist die vierte Welle ständig mit dem Sonnenrad des dritten Planetensatzes verbunden und über eine weitere Bremse an das Gehäuse ankoppelbar. Die Abtriebswelle ist ständig mit dem Hohlrad des ersten Planetensatzes verbunden.

Durch die erfindungsgemäße Ausgestaltung des Mehrstufengetriebes ergeben sich insbesondere für Personenkraftwagen geeignete Übersetzungen sowie eine erhebliche Erhöhung der Gesamtspreizung des Mehrstufengetriebes, wodurch eine Verbesserung des Fahrkomforts und eine signifikante Verbrauchsabsenkung bewirkt werden.

Darüber hinaus wird mit dem erfindungsgemäßen Mehrstufengetriebe durch eine geringe Anzahl an Schaltelementen, vorzugsweise drei Bremsen und drei Kupplungen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen. Vorzugsweise eignet sich ein Schaltelement, welches im ersten Vorwärtsgang und im Rückwärtsgang betätigt wird.

Darüber hinaus ergibt sich bei dem erfindungsgemäßen Mehrstufengetriebe ein guter Wirkungsgrad in den Hauptfahrgängen infolge geringer Schlepp- und Verzahnungsverluste.

Des weiteren liegen geringe Momente in den Schaltelementen und in den Planetensätzen des Mehrstufengetriebes vor, wodurch der Verschleiß bei dem Mehrstufengetriebe in vorteilhafter Weise reduziert wird. Ferner wird durch die geringen Momente eine entsprechend geringe Dimensionierung ermöglicht, wodurch der benötigte Bauraum und die entsprechenden Kosten reduziert werden. Darüber hinaus liegen auch geringe Drehzahlen bei den Wellen, den Schaltelementen und den Planetensätzen vor.

Außerdem ist das erfindungsgemäße Getriebe derart konzipiert, dass eine Anpassbarkeit an unterschiedliche Triebstrangausgestaltungen sowohl in Kraftflussrichtung als auch in räumlicher Hinsicht ermöglicht wird; so ist es z.B. möglich, dass Antrieb und Abtrieb auf der gleichen Seite des Gehäuses vorgesehen sind.

Die Erfindung wird im Folgenden anhand der Zeichnungen beispielhaft näher erläutert. In diesen stellen dar:
- Figur 1: eine schematische Darstellung einer bevorzugten Ausführungsform eines erfindungsgemäßen Mehrstufengetriebes;
- Figur 2: eine schematische Darstellung einer zweiten bevorzugten Ausführungsform eines erfindungsgemäßen Mehrstufengetriebes;
- Figur 3: ein beispielhaftes Schaltschema für das erfindungsgemäße Mehrstufengetriebe gemäß Fig. 1 und Fig. 2; und
- Figur 4: ein weiteres beispielhaftes Schaltschema für das erfindungsgemäße Mehrstufengetriebe gemäß Fig. 1 und Fig. 2.

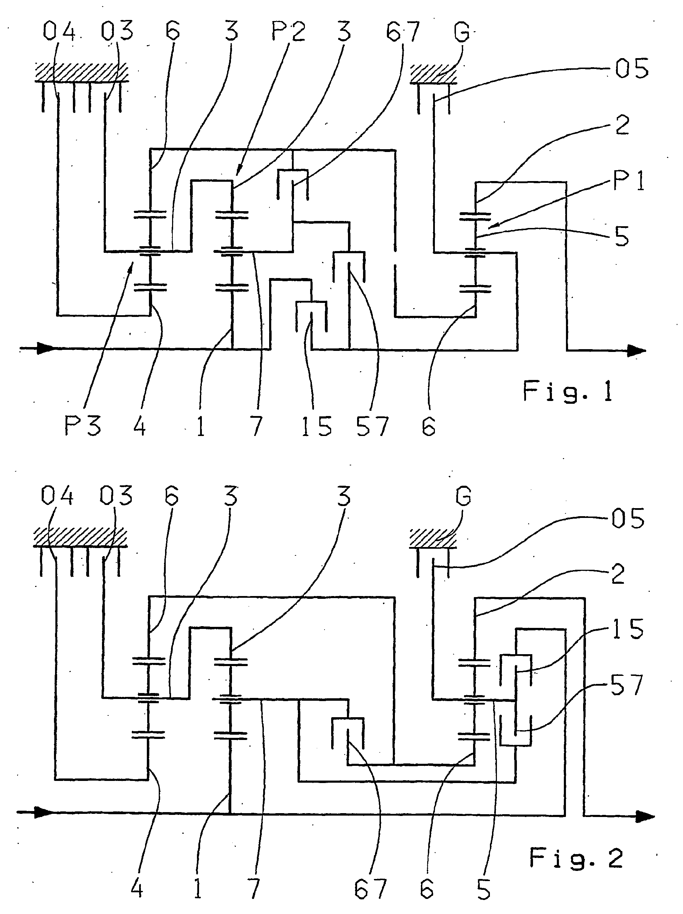

In Figur 1 und Figur 2 ist ein erfindungsgemäßes Mehrstufengetriebe mit einer Antriebswelle 1 und einer Abtriebswelle 2 dargestellt, welche in einem Gehäuse G angeordnet sind. Es sind drei Planetensätze P1, P2, P3 vorgesehen, welche als Minus-Planetenradsätze ausgebildet und bevorzugterweise in der Reihenfolge P3, P2, P1 hintereinander in axialer Richtung angeordnet sind. Ein Minus-Planetenradsatz weist bekanntlich Planetenräder auf, die mit Sonnen- und Hohlrad dieses Planetensatzes kämmen.

Wie aus Figur 1 und Figur 2 ersichtlich, sind sechs Schaltelemente, nämlich drei Bremsen 03, 04, 05 und drei Kupplungen 15, 57 und 67 vorgesehen. Vorzugsweise sind die Kupplungen als Lamellenkupplungen ausgebildet.

Mit diesen Schaltelementen ist ein selektives Schalten von acht Vorwärtsgängen und einem Rückwärtsgang realisierbar. Das erfindungsgemäße Mehrstufengetriebe weist insgesamt sieben drehbare Wellen auf, nämlich die Wellen 1, 2, 3, 4, 5, 6 und 7.

Erfindungsgemäß ist bei dem Mehrstufengetriebe gemäß Figur 1 und Figur 2 vorgesehen, dass der Antrieb durch die Welle 1 erfolgt, welche ständig mit dem Sonnenrad des zweiten Planetensatzes P2 verbunden und über die Kupplung 15 mit der Welle 5 lösbar verbindbar ist, welche ständig mit dem Steg des ersten Planetensatzes P1 verbunden, über die Bremse 05 an das Gehäuse G ankoppelbar und über die Kupplung 57 mit der Welle 7 lösbar verbindbar ist, die ständig mit dem Steg des zweiten Planetensatzes P2 verbunden und über die Kupplung 67 mit der Welle 6 lösbar verbindbar ist.

Gemäß der Erfindung ist die Welle 6 ständig mit dem Sonnenrad des ersten Planetensatzes P1 und dem Hohlrad des dritten Planetensatzes P3 verbunden, wobei die Welle 3 ständig mit dem Hohlrad des zweiten Planetensatzes P2 und dem Steg des dritten Planetensatzes P3 verbunden und über die Bremse 03 an das Gehäuse ankoppelbar ist. Ferner ist die Welle 4 ständig mit dem Sonnenrad des dritten Planetensatzes P3 verbunden und über die Bremse 04 an das Gehäuse G ankoppelbar. Die Abtriebswelle 2 ist erfindungsgemäß ständig mit dem Hohlrad des ersten Planetensatzes P1 verbunden.

Bei der Ausführungsform gemäß Figur 1 sind die Kupplungen des Getriebes, nämlich die Kupplungen 15, 57 und 67, axial betrachtet zwischen dem zweiten Planetensatz P2 und dem ersten Planetensatz P1 angeordnet. Des weiteren ist die Kupplung 67 radial betrachtet im Wesentlichen oberhalb der Kupplungen 57 und 15 angeordnet, wobei die Kupplung 57 im Wesentlichen oberhalb der Kupplung 15 angeordnet sein kann, so dass in vorteilhafter Weise eine sehr kompakte Bauweise erzielt wird.

Vorzugsweise kann der Außenlamellenträger der Kupplung 67 radial betrachtet oberhalb der Kupplungen 57 und 15 geführt werden; zudem kann der Außenlamellenträger der Kupplung 57 radial betrachtet oberhalb der Kupplung 15 geführt werden.

Bei der in Figur 2 gezeigten Ausführungsform des erfindungsgemäßen Getriebes ist die Kupplung 67 axial betrachtet zwischen dem zweiten und ersten Planetensatz P2, P1 angeordnet; radial betrachtet ist die Kupplung 67 im Wesentlichen in Höhe des Sonnenrades des zweiten Planetensatzes P2 angeordnet. Ferner ist die Kupplung 15 radial betrachtet im Wesentlichen oberhalb der Kupplung 57 angeordnet, wobei die Kupplungen 15 und 57 einen gemeinsamen Innenlamellenträger aufweisen können. Axial betrachtet sind die Kupplungen 15 und 57 vorzugsweise in Kraftflussrichtung hinter dem ersten Planetensatz P1 angeordnet.

Die räumliche Anordnung der Schaltelemente innerhalb des Getriebes kann beliebig sein und wird nur durch die Abmessungen und die äußere Formgebung des Getriebegehäuses G begrenzt.

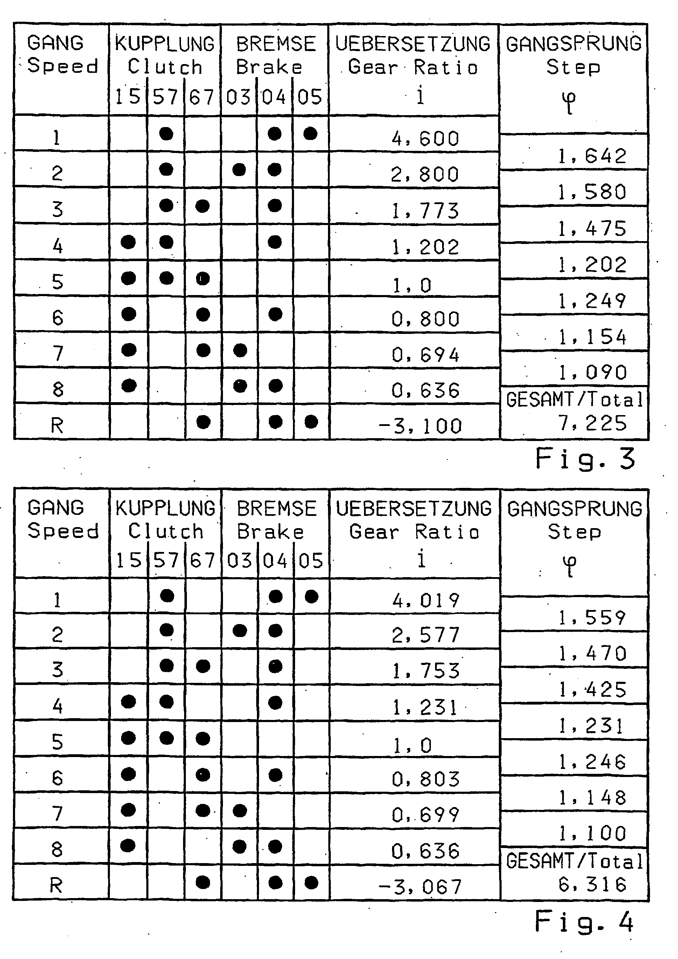

In den Figuren 3 und 4 sind beispielhafte Schaltschemata des erfindungsgemäßen Mehrstufengetriebes gemäß Figur 1 und Figur 2 dargestellt.

Für jeden Gang werden drei Schaltelemente geschlossen. Dem Schaltschema können auch beispielhafte Werte für die jeweiligen Übersetzungen i der einzelnen Gangstufen und die daraus zu bestimmenden Stufensprünge φ entnommen werden. Aus den Figuren 3 und 4 wird ersichtlich, dass bei sequentieller Schaltweise Doppelschaltungen bzw. Gruppenschaltungen vermieden werden, da zwei benachbarte Gangstufen zwei Schaltelemente gemeinsam benutzen. In vorteilhafter Weise sind die Stufensprünge in den oberen Gängen klein. Des weiteren ist der fünfte Gang als Direktgang ausgelegt.

Die in den Figuren 3 und 4 dargestellten Schaltschemata unterscheiden sich lediglich bei den Werten für die Übersetzung und die Gangsprünge aufgrund der unterschiedlichen zugrundeliegenden Standgetriebeübersetzungen der Planetensätze P1, P2, P3, die für das Schaltschema gemäß Figur 3 minus 1,75, minus 3,4 und minus 3,4 und für das Schaltschema gemäß Figur 4 minus 1,75, minus 3,05 und minus 3,05 betragen. Die Schaltlogik, also die Zuordnung der geschlossenen Schaltelemente zu den einzelnen Gängen, ist in den Figuren 3 und 4 identisch.

Der erste Vorwärtsgang ergibt sich durch Schließen der Kupplung 57 und der Bremsen 04 und 05, der zweite Vorwärtsgang durch Schließen der Bremsen 03 und 04 und der Kupplung 57, der dritte Vorwärtsgang durch Schließen der Kupplungen 57 und 67 und der Bremse 04 und der vierte Vorwärtsgang durch Schließen der Kupplungen 15 und 57 und der Bremse 04. Ferner ergibt sich der fünfte Vorwärtsgang durch Schließen der Kupplungen 15, 57 und 67, der sechste Vorwärtsgang durch Schließen der Kupplungen 15 und 67 und der Bremse 04, der siebte Vorwärtsgang durch Schließen der Kupplungen 15 und 67 und der Bremse 03 und der achte Vorwärtsgang durch Schließen der Kupplung 15 und der Bremsen 03 und 04.

Wie aus dem Schaltschema gemäß Figur 3 und Figur 4 ersichtlich, ergibt sich der Rückwärtsgang durch Schließen der Bremsen 04 und 05 und der Kupplung 67.

Bei Bedarf kann auch ein (in den Figuren 3 und 4 nicht dargestellter) zweiter Rückwärtsgang vorgesehen sein, der durch Schließen der Bremsen 03 und 05 und der Kupplung 67 ergibt. Unter Zugrundelegung der Standgetriebeübersetzungen gemäß Figur 1 beträgt die Übersetzung in diesem zweiten Rückwärtsgang minus 7,689 und stellt somit eine sogenannte Crawler-Übersetzung dar.

Gemäß der Erfindung ist ein Anfahren des Kraftfahrzeugs mit einem im Getriebe integrierten Schaltelement möglich. Hierbei ist ein Schaltelement besonders geeignet, das im ersten Gang und im Rückwärtsgang benötigt wird, also beispielsweise die Bremse 04 oder die Bremse 05.

Gemäß der Erfindung können sich auch bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird.

Es ist zudem möglich, an jeder geeigneten Stelle des Mehrstufengetriebes zusätzliche Freiläufe vorzusehen, beispielsweise zwischen einer Welle und dem Gehäuse, oder um zwei Wellen gegebenenfalls zu verbinden.

Auf der Antriebsseite oder auf der Abtriebsseite können erfindungsgemäß ein Achsdifferential und/oder ein Verteilerdifferential angeordnet werden.

Im Rahmen einer vorteilhaften Weiterbildung kann die Antriebswelle 1 durch ein Kupplungselement von einem Antriebs-Motor nach Bedarf getrennt werden, wobei als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung einsetzbar sind. Es ist auch möglich, ein derartiges Anfahrelement in Kraftflussrichtung hinter dem Getriebe anzuordnen, wobei in diesem Fall die Antriebswelle 1 ständig mit der Kurbelwelle des Motors verbunden ist.

Das erfindungsgemäße Mehrstufengetriebe ermöglicht außerdem die Anordnung eines Torsionsschwingungsdämpfers zwischen Motor und Getriebe.

Im Rahmen einer weiteren, nicht dargestellten Ausführungsform der Erfindung kann auf jeder Welle, bevorzugt auf der Antriebswelle 1 oder der Abtriebswelle 2, eine verschleißfreie Bremse, wie z.B. ein hydraulischer oder elektrischer Retarder oder dergleichen, angeordnet sein, was insbesondere für den Einsatz in Nutzkraftfahrzeugen von besonderer Bedeutung ist. Des weiteren kann zum Antrieb von zusätzlichen Aggregaten auf jeder Welle, bevorzugt auf der Antriebswelle 1 oder der Abtriebswelle 2, ein Nebenabtrieb vorgesehen sein.

Die eingesetzten Schaltelemente können als lastschaltende Kupplungen oder Bremsen ausgebildet sein. Insbesondere können kraftschlüssige Kupplungen oder Bremsen, wie z.B. Lamellenkupplungen, Bandbremsen und/oder Konuskupplungen verwendet werden. Des weiteren können als Schaltelemente auch formschlüssige Bremsen und/oder Kupplungen, wie z.B. Synchronisierungen oder Klauenkupplungen eingesetzt werden.

Ein weiterer Vorteil des hier vorgestellten Mehrstufengetriebes besteht darin, dass auf jeder Welle als Generator und/oder als zusätzliche Antriebsmaschine eine elektrische Maschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Welle, Antriebswelle
- 2: Welle, Abtriebswelle
- 3: Welle
- 4: Welle
- 5: Welle
- 6: Welle
- 7: Welle

- 03: zweite Bremse
- 04: dritte Bremse
- 05: erste Bremse
- 15: erste Kupplung
- 57: zweite Kupplung
- 67: dritte Kupplung

- P1: erster Planetensatz
- P2: zweiter Planetensatz
- P3: dritter Planetensatz
- i: Übersetzung
- φ: Stufensprung
- G: Gehäuse

## Patentansprüche

1. Mehrstufengetriebe in Planetenbauweise, insbesondere Automatgetriebe für ein Kraftfahrzeug, umfassend eine Antriebswelle (1) und eine Abtriebswelle (2), welche in einem Gehäuse (G) angeordnet sind, drei Planetensätze (P1, P2, P3), mindestens sieben drehbare Wellen (1, 2, 3, 4, 5, 6, 7) sowie mindestens sechs Schaltelemente (03, 04, 05, 15, 57, 67), umfassend Bremsen (05, 03, 04) und Kupplungen (15, 57, 67), deren selektives Eingreifen verschiedene Übersetzungsverhältnisse zwischen der Antriebswelle (1) und der Abtriebswelle (2) bewirkt, so dass mindestens acht Vorwärtsgänge und mindestens ein Rückwärtsgang realisierbar sind, wobei die Antriebswelle (1) ständig mit dem Sonnenrad des zweiten Planetensatzes (P2) verbunden und über eine erste Kupplung (15) mit der Welle (5) lösbar verbindbar ist, welche ständig mit dem Steg des ersten Planetensatzes (P1) verbunden, über eine erste Bremse (05) an das Gehäuse (G) ankoppelbar und über eine zweite Kupplung (57) mit der Welle (7) lösbar verbindbar ist, die ständig mit dem Steg des zweiten Planetensatzes (P2) verbunden und über eine dritte Kupplung (67) mit der Welle (6) lösbar verbindbar ist, wobei die Welle (6) ständig mit dem Sonnenrad des ersten Planetensatzes (P1) und dem Hohlrad des dritten Planetensatzes (P3) verbunden ist, wobei die Welle (3) ständig mit dem Hohlrad des zweiten Planetensatzes (P2) und dem Steg des dritten Planetensatzes (P3) verbunden und über eine zweite Bremse (03) an das Gehäuse (G) ankoppelbar ist, und wobei die Welle (4) ständig mit dem Sonnenrad des dritten Planetensatzes (P3) verbunden und über eine dritte Bremse (04) an das Gehäuse (G) ankoppelbar ist, und wobei die Abtriebswelle (2) ständig mit dem Hohlrad des ersten Planetensatzes (P1) verbunden ist.

2. Mehrstufengetriebe nach Anspruch 1, **dadurch gekennzeichnet, dass** die Planetensätze (P1, P2, P3) in der Reihenfolge P3, P2, P1 hintereinander in axialer Richtung angeordnet sind.

3. Mehrstufengetriebe nach Anspruch 1 oder 2, **dadurch gekennzeichnet, dass** die Planetensätze (P1, P2, P3) als Minus-Planetenradsätze ausgebildet sind.

4. Mehrstufengetriebe nach einem der vorangehenden Ansprüche, **dadurch gekennzeichnet, dass** die erste, zweite und dritte Kupplung (15, 57, 67) axial betrachtet zwischen dem zweiten Planetensatz (P2) und dem ersten Planetensatz (P1) angeordnet sind.

5. Mehrstufengetriebe nach einem der vorangehenden Ansprüche, **dadurch gekennzeichnet, dass** die dritte Kupplung (67) radial betrachtet im Wesentlichen oberhalb der dritten und ersten Kupplung (57, 15) angeordnet ist, wobei die dritte Kupplung (57) im Wesentlichen oberhalb der ersten Kupplung (15) angeordnet ist.

6. Mehrstufengetriebe nach einem der vorangehenden Ansprüche, **dadurch gekennzeichnet, dass** der Außenlamellenträger der dritten Kupplung (67) radial betrachtet oberhalb der dritten und ersten Kupplung (57, 15) geführt ist.

7. Mehrstufengetriebe nach einem der vorangehenden Ansprüche, **dadurch gekennzeichnet, dass** der Außenlamellenträger der zweiten Kupplung (57) radial betrachtet oberhalb der ersten Kupplung (15) geführt ist.

8. Mehrstufengetriebe nach einem der vorangehenden Ansprüche 1 bis 3, **dadurch gekennzeichnet, dass** die dritte Kupplung (67) axial betrachtet zwischen dem zweiten und dem ersten Planetensatz (P2, P1) angeordnet ist.

9. Mehrstufengetriebe nach einem der vorangehenden Ansprüche 1 bis 3 oder nach Anspruch 8, **dadurch gekennzeichnet, dass** die dritte Kupplung (67) radial betrachtet im Wesentlichen in Höhe des Sonnenrades des zweiten Planetensatzes (P2) angeordnet ist.

10. Mehrstufengetriebe nach einem der vorangehenden Ansprüche 1 bis 3 oder nach Anspruch 8 oder 9, **dadurch gekennzeichnet, dass** die erste Kupplung (15) radial betrachtet im Wesentlichen oberhalb der zweiten Kupplung (57) angeordnet ist.

11. Mehrstufengetriebe nach Anspruch 10, **dadurch gekennzeichnet, dass** die erste und zweite Kupplung (15, 57) einen gemeinsamen Innenlamellenträger aufweisen.

12. Mehrstufengetriebe nach einem der vorangehenden Ansprüche 1 bis 3 oder nach einem der vorangehenden Ansprüche 8 bis 11, **dadurch gekennzeichnet, dass** die erste und zweite Kupplung (15, 57) axial betrachtet in Kraftflussrichtung hinter dem ersten Planetensatz (P1) angeordnet sind.

13. Mehrstufengetriebe nach einem der vorangehenden Ansprüche, **dadurch gekennzeichnet, dass** sich der erste Vorwärtsgang durch Schließen der zweiten Kupplung (57) und der ersten und dritten Bremse (05, 04), der zweite Vorwärtsgang durch Schließen der zweiten und dritten Bremse (03, 04) und der zweiten Kupplung (57), der dritte Vorwärtsgang durch Schließen der zweiten und dritten Kupplung (57, 67) und der dritten Bremse (04), der vierte Vorwärtsgang durch Schließen der ersten und zweiten Kupplung (15, 57) und der dritten Bremse (04), der fünfte Vorwärtsgang durch Schließen der ersten, zweiten und dritten Kupplung (15, 57, 67), der sechste Vorwärtsgang durch Schließen der ersten und vierten Kupplung (15, 67) und der dritten Bremse (04), der siebte Vorwärtsgang durch Schließen der ersten und vierten Kupplung (15, 67) und der zweiten Bremse (03) und der achte Vorwärtsgang durch Schließen der ersten Kupplung (15) und der zweiten und dritten Bremse (03, 04) ergibt.

14. Mehrstufengetriebe nach einem der vorangehenden Ansprüche, **dadurch gekennzeichnet, dass** sich ein Rückwärtsgang durch Schlie-βen der ersten und dritten Bremse (05, 04) und der dritten Kupplung (67) und/oder durch Schließen der ersten und zweiten Bremse (05, 03) und der dritten Kupplung (67) ergibt.

15. Mehrstufengetriebe nach einem der vorangehenden Ansprüche, **dadurch gekennzeichnet, dass** an jeder geeigneten Stelle zusätzliche Freiläufe einsetzbar sind.

16. Mehrstufengetriebe nach Anspruch 15, **dadurch gekennzeichnet, dass** die Freiläufe zwischen den Wellen (1, 2, 3, 4, 5, 6, 7) und dem Gehäuse (G) vorgesehen sind.

17. Mehrstufengetriebe nach einem der vorstehenden Ansprüche, **dadurch gekennzeichnet, dass** Antrieb und Abtrieb auf der gleichen Seite des Gehäuses vorgesehen sind.

18. Mehrstufengetriebe nach einem der vorstehenden Ansprüche, **dadurch gekennzeichnet, dass** ein Achs- und/oder ein Verteilerdifferential auf der Antriebsseite oder der Abtriebsseite angeordnet ist.

19. Mehrstufengetriebe nach einem der vorstehenden Ansprüche, **dadurch gekennzeichnet, dass** die Antriebswelle (1) durch ein Kupplungselement von einem Antriebs-Motor des Kraftfahrzeugs trennbar ist.

20. Mehrstufengetriebe nach Anspruch 19, **dadurch gekennzeichnet, dass** als Kupplungselement ein hydrodynamischer Wandler, eine hydraulische Kupplung, eine trockene Anfahrkupplung, eine nasse Anfahrkupplung, eine Magnetpulverkupplung oder eine Fliehkraftkupplung vorgesehen ist.

21. Mehrstufengetriebe nach einem der vorstehenden Ansprüche, **dadurch gekennzeichnet, dass** in Kraftflussrichtung hinter dem Getriebe ein externes Anfahrelement, insbesondere nach Anspruch 14 oder 15, anordbar ist, wobei die Antriebswelle (1) fest mit einer Kurbelwelle des Antriebs-Motors verbunden ist.

22. Mehrstufengetriebe nach einem der vorstehenden Ansprüche, **dadurch gekennzeichnet, dass** das Anfahren des Kraftfahrzeugs mittels eines getriebeinternen Schaltelements, insbesondere mittels der dritten Bremse (04) oder der ersten Bremse (05) des Getriebes, erfolgt, wobei die Antriebswelle (1) ständig mit der Kurbelwelle des Antriebs-Motors verbunden ist.

23. Mehrstufengetriebe nach einem der vorstehenden Ansprüche, **dadurch gekennzeichnet, dass** zwischen Antriebs-Motor und Getriebe ein Torsionsschwingungsdämpfer anordbar ist.

24. Mehrstufengetriebe nach einem der vorstehenden Ansprüche, **dadurch gekennzeichnet, dass** auf jeder Welle eine verschleißfreie Bremse anordbar ist.

25. Mehrstufengetriebe nach einem der vorstehenden Ansprüche, **dadurch gekennzeichnet, dass** zum Antrieb von zusätzlichen Aggregaten auf jeder Welle ein Nebenabtrieb anordbar ist.

26. Mehrstufengetriebe nach Anspruch 25, **dadurch gekennzeichnet, dass** der Nebenabtrieb auf der Antriebswelle (1) oder der Abtriebswelle (2) anordbar ist.

27. Mehrstufengetriebe nach einem der vorstehenden Ansprüche, **dadurch gekennzeichnet, dass** die Schaltelemente als lastschaltende Kupplungen oder Bremsen ausgebildet sind.

28. Mehrstufengetriebe nach Anspruch 27, **dadurch gekennzeichnet, dass** Lamellenkupplungen, Bandbremsen und/oder Konuskupplungen einsetzbar sind.

29. Mehrstufengetriebe nach einem der Ansprüche 1 bis 26, **dadurch gekennzeichnet, dass** als Schaltelemente formschlüssige Bremsen und/oder Kupplungen vorgesehen sind.

30. Mehrstufengetriebe nach einem der vorangehenden Ansprüche, **dadurch gekennzeichnet, dass** auf jeder Welle als Generator und/oder als zusätzliche Antriebsmaschine eine elektrische Maschine anbringbar ist.

## Claims

1. Multispeed transmission of planetary construction, in particular automatic transmission for a motor vehicle, comprising a drive shaft (1) and an output shaft (2), which are arranged in a housing (G), three planetary gear sets (P1, P2, P3), at least seven rotating shafts (1, 2, 3, 4, 5, 6, 7), and at least six shift elements (03, 04, 05, 15, 57, 67), including brakes (05, 03, 04) and clutches (15, 57, 67), the selective engagement of which results in different gear ratios between the drive shaft (1) and the output shaft (2), making it possible to obtain at least eight forward gears and at least one reverse gear, wherein the drive shaft (1) is continuously connected to the sun gear of the second planetary gear set (P2) and can be detachably connected, by means of a first clutch (15), to the shaft (5), which is continuously connected to the carrier of the first planetary gear set (P1), can be coupled, by means of a first brake (05), to the housing (G), and can be detachably connected, by means of a second clutch (57), to the shaft (7), which is continuously connected to the carrier of the second planetary gear set (P2) and can be detachably connected, by means of a third clutch (67), to the shaft (6), wherein the shaft (6) is continuously connected to the sun gear of the first planetary gear set (P1) and to the annulus of the third planetary gear set (P3), wherein the shaft (3) is continuously connected to the annulus of the second planetary gear set (P2) and to the carrier of the third planetary gear set (P3) and can be coupled, by means of a second brake (03), to the housing (G), and wherein the shaft (4) is continuously connected to the sun gear of the third planetary gear set (P3) and can be coupled, by means of a third brake (04), to the housing (G), and wherein the output shaft (2) is continuously connected to the annulus of the first planetary gear set (P1).

2. Multispeed transmission according to Claim 1, **characterized in that** the planetary gear sets (P1, P2, P3) are arranged axially in series in the following order: P3, P2, P1.

3. Multispeed transmission according to Claim 1 or 2, **characterized in that** the planetary gear sets (P1, P2, P3) are designed as negative planetary gear sets.

4. Multispeed transmission according to one of the preceding claims, **characterized in that**, when viewed axially, the first, second and third clutches (15, 57, 67) are arranged between the second planetary gear set (P2) and the first planetary gear set (P1).

5. Multispeed transmission according to one of the preceding claims, **characterized in that,** when viewed radially, the third clutch (67) is arranged substantially above the third and first clutches (57, 15), and the third clutch (57) is arranged substantially above the first clutch (15).

6. Multispeed transmission according to one of the preceding claims, **characterized in that,** when viewed radially, the outer disc carrier of the third clutch (67) is mounted above the third and first clutches (57, 15).

7. Multispeed transmission according to one of the preceding claims, **characterized in that**, when viewed radially, the outer disc carrier of the second clutch (57) is mounted above the first clutch (15).

8. Multispeed transmission according to one of preceding claims 1 to 3, **characterized in that**, when viewed axially, the third clutch (67) is arranged between the second planetary gear set (P2) and the first planetary gear set (P1).

9. Multispeed transmission according to one of preceding claims 1 to 3 or according to Claim 8, **characterized in that**, when viewed radially, the third clutch (67) is arranged substantially at the level of the sun gear of the second planetary gear set (P2).

10. Multispeed transmission according to one of preceding claims 1 to 3 or according to Claim 8 or 9, **characterized in that**, when viewed radially, the first clutch (15) is arranged substantially above the second clutch (57).

11. Multispeed transmission according to Claim 10, **characterized in that** the first and second clutches (15, 57) have a common inner disc carrier.

12. Multispeed transmission according to one of preceding claims 1 to 3 or according to one of preceding claims 8 to 11, **characterized in that**, when viewed axially, the first clutch and second clutches (15, 57) are arranged downstream of the first planetary gear set (P1) in a power flow direction.

13. Multispeed transmission according to one of the preceding claims, **characterized in that** the first forward gear results from engagement of the second clutch (57) and of the first and third brakes (05, 04), the second forward gear results from engagement of the second and third brakes (03, 04) and of the second clutch (57), the third forward gear results from engagement of the second and third clutches (57, 67) and of the third brake (04), the fourth forward gear results from engagement of the first and second clutches (15, 57) and of the third brake (04), the fifth forward gear results from engagement of the first, second and third clutches (15, 57, 67), the sixth forward gear results from engagement of the first and fourth clutches (15, 67) and of the third brake (04), the seventh forward gear results from engagement of the first and fourth clutches (15, 67) and of the second brake (03), and the eighth forward gear results from engagement of the first clutch (15) and of the second and third brakes (03, 04).

14. Multispeed transmission according to one of the preceding claims, **characterized in that** a reverse gear results from engagement of the first and third brakes (05, 04) and of the third clutch (67), and/or by engagement of the first and second brakes (05, 03) and of the third clutch (67).

15. Multispeed transmission according to one of the preceding claims, **characterized in that** additional override clutches can be inserted at any suitable position.

16. Multispeed transmission according to Claim 15, **characterized in that** the override clutches are provided between the shafts (1, 2, 3, 4, 5, 6, 7) and the housing (G).

17. Multispeed transmission according to one of the preceding claims, **characterized in that** the drive and the output are provided on the same side of the housing.

18. Multispeed transmission according to one of the preceding claims, **characterized in that** an axle and/or a transfer differential is/are arranged on the drive side or the output side.

19. Multispeed transmission according to one of the preceding claims, **characterized in that** the drive shaft (1) can be separated from an engine of the motor vehicle by a clutch element.

20. Multispeed transmission according to Claim 19, **characterized in that** a hydrodynamic converter, a hydraulic clutch, a dry starting clutch, a wet starting clutch, a magnetic powder clutch or a centrifugal clutch is provided as the clutch element.

21. Multispeed transmission according to one of the preceding claims, **characterized in that** an external starting element, in particular an external starting element according to Claim 14 or 15, can be arranged downstream of the transmission in a power flow direction, and the drive shaft (1) is connected in a fixed manner to a crankshaft of the engine.

22. Multispeed transmission according to one of the preceding claims, **characterized in that** the motor vehicle is started by means of a shift element within the transmission, in particular by means of the third brake (04) or of the first brake (05) of the transmission, and the drive shaft (1) is continuously connected to the crankshaft of the engine.

23. Multispeed transmission according to one of the preceding claims, **characterized in that** a torsional vibration damper can be arranged between the engine and the transmission.

24. Multispeed transmission according to one of the preceding claims, **characterized in that** a wear-free brake can be arranged on each shaft.

25. Multispeed transmission according to one of the preceding claims, **characterized in that** a power take-off can be arranged on each shaft in order to drive additional units.

26. Multispeed transmission according to Claim 25, **characterized in that** the power take-off can be arranged on the drive shaft (1) or the output shaft (2) .

27. Multispeed transmission according to one of the preceding claims, **characterized in that** the shift elements are designed as power shift clutches or brakes.

28. Multispeed transmission according to Claim 27, **characterized in that** multi-plate clutches, band brakes and/or cone clutches can be used.

29. Multispeed transmission according to one of Claims 1 to 26, **characterized in that** positive brakes and/or clutches are provided as shift elements.

30. Multispeed transmission according to one of the preceding claims, **characterized in that** an electric machine can be mounted on each shaft as a generator and/or as an additional drive motor.

## Revendications

1. Transmission à plusieurs étages de construction planétaire, en particulier transmission automatique pour un véhicule automobile, comprenant un arbre d'entraînement (1) et un arbre de prise de force (2), qui sont disposés dans un boîtier (G), trois trains planétaires (P1, P2, P3), au moins sept arbres rotatifs (1, 2, 3, 4, 5, 6, 7) ainsi qu'au moins six éléments de changement de vitesse (03, 04, 05, 15, 57, 67), comprenant des freins (05, 03, 04) et des embrayages (15, 57, 67) dont l'engagement sélectif provoque différents rapports de multiplication entre l'arbre d'entraînement (1) et l'arbre de prise de force (2), de sorte qu'au moins huit vitesses de marche avant et au moins une vitesse de marche arrière puissent être réalisées, l'arbre d'entraînement (1) étant connecté de manière permanente à la roue solaire du deuxième train planétaire (P2) et pouvant être connecté de manière séparable par le biais d'un premier embrayage (15) à l'arbre (5), qui est connecté de manière permanente au porte-satellites du premier train planétaire (P1), peut être accouplé par le biais d'un premier frein (05) au boîtier (G) et peut être connecté de manière séparable par le biais d'un deuxième embrayage (67) à l'arbre (7), qui est connecté de manière permanente au porte-satellites du deuxième train planétaire (P2) et qui peut être connecté de manière séparable par le biais d'un troisième embrayage (67) à l'arbre (6), l'arbre (6) étant connecté de manière permanente à la roue solaire du premier train planétaire (P1) et à la couronne du troisième train planétaire (P3), l'arbre (3) étant connecté de manière permanente à la couronne du deuxième train planétaire (P2) et au porte-satellites du troisième train planétaire (P3) et pouvant être accouplé par le biais d'un deuxième frein (03) au boîtier (G), et l'arbre (4) étant connecté de manière permanente à la roue solaire du troisième train planétaire (P3) et pouvant être accouplé par le biais d'un troisième frein (04) au boîtier (G), et l'arbre de prise de force (2) étant connecté de manière permanente à la couronne du premier train planétaire (P1).

2. Transmission à plusieurs étages selon la revendication 1, **caractérisée en ce que** les trains planétaires (P1, P2, P3) sont disposés dans l'ordre P3, P2, P1 les uns derrière les autres dans la direction axiale.

3. Transmission à plusieurs étages selon la revendication 1 ou 2, **caractérisée en ce que** les trains planétaires (P1, P2, P3) sont réalisés sous forme de trains planétaires négatifs.

4. Transmission à plusieurs étages selon l'une quelconque des revendications précédentes, **caractérisée en ce que** le premier, deuxième et troisième embrayage (15, 57, 67), considérés axialement, sont disposés entre le deuxième train planétaire (P2) et le premier train planétaire (P1).

5. Transmission à plusieurs étages selon l'une quelconque des revendications précédentes, **caractérisée en ce que** le troisième embrayage (67), considéré radialement, est disposé essentiellement au-dessus du deuxième et du premier embrayage (57, 15), le troisième embrayage (57) étant disposé essentiellement au-dessus du premier embrayage (15).

6. Transmission à plusieurs étages selon l'une quelconque des revendications précédentes, **caractérisée en ce que** le support de disques extérieur du troisième embrayage (67), considéré radialement, est guidé au-dessus du troisième et du premier embrayage (57, 15).

7. Transmission à plusieurs étages selon l'une quelconque des revendications précédentes, **caractérisée en ce que** le support de disques extérieur du deuxième embrayage (57), considéré radialement, est guidé au-dessus du premier embrayage (15).

8. Transmission à plusieurs étages selon l'une quelconque des revendications 1 à 3, **caractérisée en ce que** le troisième embrayage (67), considéré axialement, est disposé entre le deuxième et le premier train planétaire (P2, P1).

9. Transmission à plusieurs étages selon l'une quelconque des revendications 1 à 3 ou selon la revendication 8, **caractérisée en ce que** le troisième embrayage (67), considéré radialement, est disposé essentiellement à la hauteur de la roue solaire du deuxième train planétaire (P2).

10. Transmission à plusieurs étages selon l'une quelconque des revendications 1 à 3 ou selon la revendication 8 ou 9, **caractérisée en ce que** le premier embrayage (15), considéré radialement, est disposé essentiellement au-dessus du deuxième embrayage (57).

11. Transmission à plusieurs étages selon la revendication 10, **caractérisée en ce que** le premier et le troisième embrayage (15, 57) présentent un support de disque intérieur commun.

12. Transmission à plusieurs étages selon l'une quelconque des revendications 1 à 3 ou selon l'une quelconque des revendications 8 à 11, **caractérisée en ce que** le premier et le deuxième embrayage (15, 57), considérés axialement, sont disposés dans la direction du flux de forces derrière le premier train planétaire (P1).

13. Transmission à plusieurs étages selon l'une quelconque des revendications précédentes, **caractérisée en ce que** la première vitesse de marche avant est obtenue par fermeture du deuxième embrayage (57) et du premier et du troisième frein (05, 04), la deuxième vitesse de marche avant est obtenue par fermeture du deuxième et du troisième frein (03, 04) et du deuxième embrayage (57), la troisième vitesse de marche avant est obtenue par fermeture du deuxième et du troisième embrayage (57, 67) et du troisième frein (04), la quatrième vitesse de marche avant est obtenue par fermeture du premier et du deuxième embrayage (15, 57) et du troisième frein (04), la cinquième vitesse de marche avant est obtenue par fermeture du premier, deuxième et troisième embrayage (15, 57, 67), la sixième vitesse de marche avant est obtenue par fermeture du premier et du quatrième embrayage (15, 67) et du troisième frein (04), la septième vitesse de marche avant est obtenue par fermeture du premier et du quatrième embrayage (15, 67) et du deuxième frein (03) et la huitième vitesse de marche avant est obtenue par fermeture du premier embrayage (15) et du deuxième et du troisième frein (03, 04).

14. Transmission à plusieurs étages selon l'une quelconque des revendications précédentes, **caractérisée en ce qu'**une vitesse de marche arrière est obtenue par fermeture du premier et du troisième frein (05, 04) et du troisième embrayage (67) et/ou par fermeture du premier et du deuxième frein (05, 03) et du troisième embrayage (67).

15. Transmission à plusieurs étages selon l'une quelconque des revendications précédentes, **caractérisée en ce que** l'on peut insérer des roues libres supplémentaires en chaque emplacement approprié.

16. Transmission à plusieurs étages selon la revendication 15, **caractérisée en ce que** les roues libres sont prévues entre les arbres (1, 2, 3, 4, 5, 6, 7) et le boîtier (G).

17. Transmission à plusieurs étages selon l'une quelconque des revendications précédentes, **caractérisée en ce que** l'entraînement et la prise de force sont prévues du même côté du boîtier.

18. Transmission à plusieurs étages selon l'une quelconque des revendications précédentes, **caractérisée en ce qu'**un différentiel d'essieu et/ou intermédiaire est disposé du côté de l'entraînement ou de la prise de force.

19. Transmission à plusieurs étages selon l'une quelconque des revendications précédentes, **caractérisée en ce que** l'arbre d'entraînement (1) peut être séparé d'un moteur d'entraînement du véhicule automobile par un élément d'embrayage.

20. Transmission à plusieurs étages selon la revendication 19, **caractérisée en ce que** l'on prévoit comme élément d'embrayage un convertisseur hydrodynamique, un embrayage hydraulique, un embrayage de démarrage sec, un embrayage de démarrage humide, un embrayage à poudre magnétique ou un embrayage à force centrifuge.

21. Transmission à plusieurs étages selon l'une quelconque des revendications précédentes, **caractérisée en ce que**, dans la direction du flux de forces derrière la transmission, on peut disposer un élément de démarrage externe, notamment selon la revendication 14 ou 15, l'arbre d'entraînement (1) étant relié fixement à un vilebrequin du moteur d'entraînement.

22. Transmission à plusieurs étages selon l'une quelconque des revendications précédentes, **caractérisée en ce que** le démarrage du véhicule automobile a lieu au moyen d'un élément de commutation interne à la transmission, notamment au moyen du troisième frein (04) ou du premier frein (05) de la transmission, l'arbre d'entraînement (1) étant connecté de manière permanente au vilebrequin du moteur d'entraînement.

23. Transmission à plusieurs étages selon l'une quelconque des revendications précédentes, **caractérisée en ce que** l'on peut disposer un amortisseur d'oscillations de torsion entre le moteur d'entraînement et la transmission.

24. Transmission à plusieurs étages selon l'une quelconque des revendications précédentes, **caractérisée en ce que** l'on peut disposer sur chaque arbre un frein sans usure.

25. Transmission à plusieurs étages selon l'une quelconque des revendications précédentes, **caractérisée en ce que** sur chaque arbre peut être disposée une prise de force auxiliaire pour l'entraînement d'unités supplémentaires.

26. Transmission à plusieurs étages selon la revendication 25, **caractérisée en ce que** la prise de force auxiliaire peut être disposée sur l'arbre d'entraînement (1) ou l'arbre de prise de force (2) .

27. Transmission à plusieurs étages selon l'une quelconque des revendications précédentes, **caractérisée en ce que** les éléments de commutation sont réalisés sous forme de freins ou d'embrayages à commutation de charge.

28. Transmission à plusieurs étages selon la revendication 27, **caractérisée en ce que** l'on peut utiliser des embrayages à disques, des freins à ruban et/ou des embrayages coniques.

29. Transmission à plusieurs étages selon l'une quelconque des revendications 1 à 26, **caractérisée en ce que** l'on prévoit comme éléments de commutation des freins et/ou des embrayages à engagement par correspondance géométrique.

30. Transmission à plusieurs étages selon l'une quelconque des revendications précédentes, **caractérisée en ce que** sur chaque arbre peut être montée une machine électrique en tant que générateur et/ou machine d'entraînement supplémentaire.
